# FASCICULE DE BREVET EUROPEEN

(11) **EP 4 154 693 B1**
(45) Date de publication et mention de la délivrance du brevet: **05.06.2024**
(21) Numéro de dépôt: 22197601.2
(22) Date de dépôt: 23.09.2022
(51) Int. Cl.: A01B 39/16, A01B 39/18, A01B 59/06, A01B 63/104, A01B 63/106, A01B 63/02

(54) **DISPOSITIF PORTE-OUTILS POUR TRACTEUR PERMETTANT DE TRAVAILLER SIMULTANÉMENT DEUX RANGS COMPLETS**
WERKZEUGTRÄGERVORRICHTUNG FÜR TRAKTOREN ZUM GLEICHZEITIGEN BEARBEITEN ZWEIER VOLLREIHEN
TRACTOR IMPLEMENT HOLDER FOR SIMULTANEOUSLY WORKING TWO COMPLETE ROWS

(30) Priorité: 27.09.2021 FR 2110137
(43) Date de publication de la demande: 29.03.2023
(73) Titulaire: Chassi'Nov, 33760 Montignac (FR)
(72) Inventeur: ABELA, Cyril, 33760 MONTIGNAC (FR)
(74) Mandataire: Fantin, Laurent

(56) Documents cités:
- DE-U1-202019 100 229
- FR-A1- 2 406 384
- FR-A1- 3 106 716
- US-A- 3 507 335
- US-B1- 10 448 571

## Description

La présente demande se rapporte à un dispositif porte-outils pour tracteur permettant de travailler simultanément deux rangs complets.

De nombreux outils de travail du sol, comme des disques émotteurs ou des doigts bineurs par exemple, ont été développés pour réaliser un désherbage mécanique des cavaillons.

Selon un mode de réalisation, les outils de travail du sol sont supportés par un châssis positionné à l'arrière d'un tracteur. Lors de l'opération de désherbage, le tracteur circule dans les inter-rangs et les outils sont positionnés sur le châssis de manière à traiter les deux demi-rangs de vigne de l'inter-rang dans lequel est situé le tracteur.

Cette opération est délicate car le conducteur du tracteur doit regarder devant pour positionner le tracteur entre les rangs et derrière pour positionner les outils correctement par rapport aux rangs de vigne. Or, les pieds de vigne ne doivent pas être abîmés lors de cette opération de désherbage.

De nombreux systèmes d'évitement de pieds ont été développés pour positionner automatiquement les outils par rapport aux rangs de vigne. Toutefois, même avec ces systèmes, le conducteur du tracteur doit régulièrement regarder vers l'arrière pour contrôler le bon fonctionnement de ces systèmes d'évitement. Par conséquent, la vitesse d'avance du tracteur est réduite.

Le désherbage mécanique permet d'éviter l'usage de produits chimiques comme les désherbants. Cette suppression permet de réduire l'impact sur l'environnement et d'obtenir un gain pour les coûts d'exploitation.

Cependant, pour un même résultat sur le plan du désherbage, il est nécessaire de réaliser le désherbage mécanique plus fréquemment (par rapport au désherbage chimique), ce qui se traduit par des coûts d'exploitation supplémentaires et un impact sur l'environnement en raison de la quantité plus importante de carburant consommé.

Les documents US 3 507 335 A, FR 2 406 384 A1, US 10 448 571 B1, FR 3 106 716 A1 et DE 20 2019 100229 U1 décrivent des dispositifs porte-outils connus.

La présente invention vise à remédier à tout ou partie des inconvénients de l'art antérieur.

A cet effet, l'invention a pour objet un dispositif porte-outils configuré pour être monté sur un tracteur, le dispositif porte-outils comprend :
- un porte-outils intérieur comportant :
   o au moins une traverse inférieure configurée pour être positionnée sous le bloc moteur du tracteur entre les essieux avant et arrière et reliée au tracteur,
   o deux supports intérieurs droit et gauche prévus aux extrémités de la (ou les) traverse(s) inférieure(s),
   o gauche relié au support intérieur gauche,
- un porte-outils extérieur comportant :
   o des montants droit et gauche, configurés pour être positionnés de part et d'autre du bloc moteur du tracteur, qui présentent chacun une extrémité inférieure configurée pour être reliée au tracteur et une extrémité supérieure,
   o au moins une traverse supérieure reliant les extrémités supérieures des montants droit et gauche et configurée pour être positionnée au-dessus du bloc moteur du tracteur,
   o un bras vertical extérieur droit qui présente une extrémité supérieure reliée à une première extrémité de la (ou les) traverse(s) supérieure(s),
   o un bras vertical extérieur gauche qui présente une extrémité supérieure reliée à une deuxième extrémité de la (ou les) traverse(s) supérieure(s),
   o deux supports extérieurs droit et gauche prévus aux extrémités inférieures des bras verticaux extérieurs droit et gauche,
   o au moins un outil extérieur droit relié au support extérieur droit et au moins un outil extérieur gauche relié au support extérieur gauche,
- les porte-outils intérieur et extérieur étant positionnés l'un par rapport à l'autre de manière à ce que :
   o le support intérieur droit soit positionné sensiblement en face du support extérieur droit, les supports intérieur et extérieur droits étant positionnés de part et d'autre d'un même rang en fonctionnement,
   o le support intérieur gauche soit positionné sensiblement en face du support extérieur gauche, les supports intérieur et extérieur gauches étant positionnés de part et d'autre d'un même rang en fonctionnement.

Ce dispositif porte-outils permet en un seul passage de traiter deux rangs complets. Le fait de positionner les outils entre les essieux avant et arrière du tracteur permet au conducteur de les contrôler tout en conduisant le tracteur. Ainsi, la vitesse d'avance du tracteur équipé de ce dispositif peut être plus élevée que celles des tracteurs utilisant des machines de l'art antérieur.

Le dispositif porte-outils est configuré pour faire travailler au moins deux outils face à face, de part et d'autre du rang, ce qui limite la projection de mottes et de poussière dans le cas de disques émotteurs. Dans le cas d'outils de type doigts bineurs, il est possible d'imbriquer légèrement les doigts afin de réduire les risques d'endommagement des plants ou des pieds de vigne. De plus, le dispositif porte-outils peut permettre de disposer, de part et d'autre du rang, plusieurs outils positionnés l'un après l'autre pour une plus grande efficacité.

Enfin, le dispositif porte-outils de l'invention peut être utilisé en même temps qu'une autre machine fixée sur l'attelage arrière et/ou avant du tracteur ce qui permet de réduire les coûts d'exploitation.

D'autres caractéristiques et avantages ressortiront de la description de l'invention qui va suivre, description donnée à titre d'exemple uniquement, en regard des dessins annexés parmi lesquels :
- La figure 1 est une vue en perspective du dispositif porte-outils illustrant un mode de réalisation de l'invention,
- La figure 2 est une vue de face du dispositif porte-outils visible sur la figure 1 monté sur un tracteur,
- La figure 3 est une vue latérale du dispositif porte-outils visible sur la figure 1 monté sur un tracteur,
- La figure 4 est une vue de dessus du dispositif porte-outils visible sur la figure1 monté sur un tracteur,
- La figure 5 est une vue en perspective d'un support intérieur d'outils illustrant un mode de réalisation de l'invention, et
- La figure 6 est une vue en perspective d'un support extérieur d'outils illustrant un mode de réalisation de l'invention.

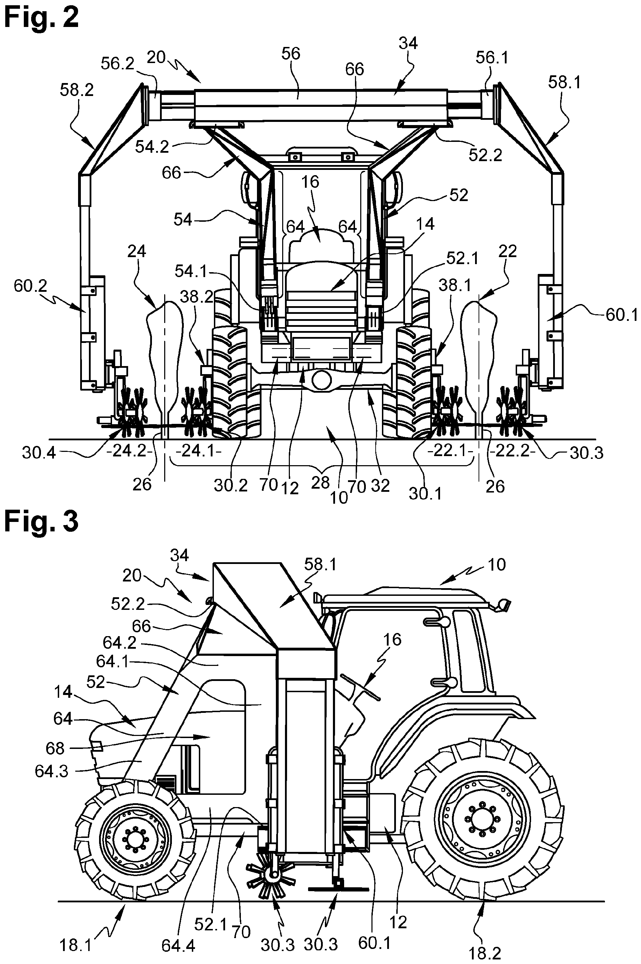

Selon un mode de réalisation visible sur les figures 2 à 4, un tracteur 10 comprend un châssis 12 supportant, d'avant en arrière, un bloc moteur 14, un poste de conduite 16, un attelage arrière (non visible) ainsi que des essieux avant 18.1 et arrière 18.2 supportant le châssis 12. Selon une configuration, le bloc moteur 14 est recouvert d'un capot et le poste de conduite 16 peut être surmonté d'une cabine. Le châssis 12 peut également supporter, à l'avant du bloc moteur 14, un porte-masse et/ou un attelage avant. Généralement, le bloc moteur 14 et/ou le châssis 12 comprennent des ancrages pour fixer des équipements, comme un chargeur frontal par exemple. La position et le nombre de ces ancrages peuvent varier d'un modèle de tracteur à l'autre.

Le tracteur 10 n'est pas plus décrit car il est connu de l'homme du métier.

Pour la suite de la description, une direction longitudinale correspond à la direction avant/arrière du tracteur 10. Une direction transversale est une direction perpendiculaire à la direction longitudinale et horizontale.

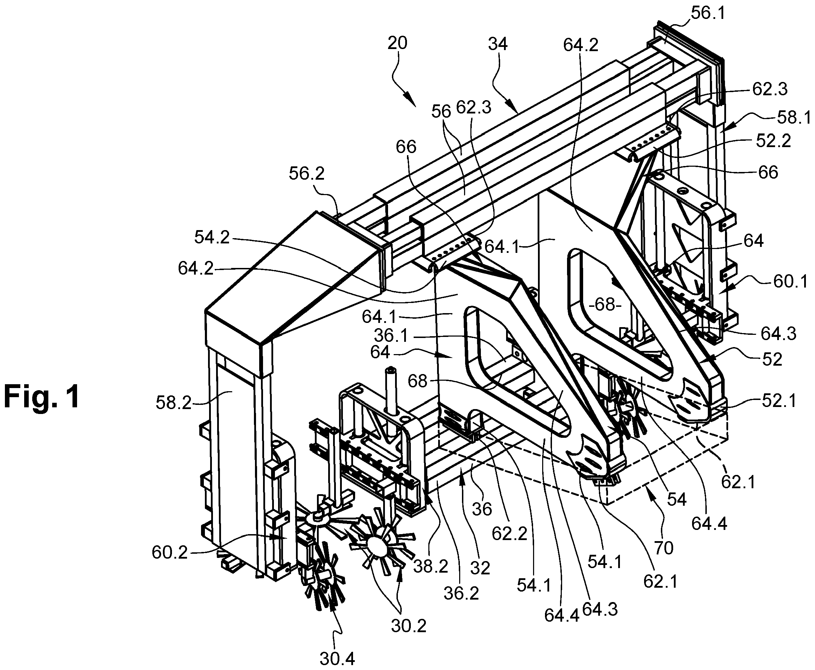

Sur les figures 1 à 4, on a représenté un dispositif porte-outils 20 supporté par le tracteur 10 adapté pour la viticulture. Cependant, l'invention n'est pas limitée à la cette culture. Ainsi, le dispositif porte-outils 20 peut être utilisé pour d'autres cultures plantées en rangs entre lesquels peut circuler un tracteur 10.

Une parcelle de vigne comprend plusieurs rangs 22, 24 au niveau desquels sont positionnés des pieds de vigne 26 espacés les uns des autres ainsi que des zones entre les rangs, appelées inter-rangs 28, dans lesquelles circule le tracteur 10. Lorsque le tracteur 10 est positionné dans un inter-rang 28 donné, chaque rang 22, 24 positionné de part et d'autre de l'inter-rang, 28 comprend un demi-rang intérieur 22.1, 24.1 positionné dans l'inter-rang 28 dans lequel est positionné le tracteur 10 ainsi qu'un demi-rang 22.2, 24.2 extérieur positionné dans un des inter-rangs situés de part et d'autre de l'inter-rang 28 donné. Chaque rang 22, 24 comprend une bande de terre, également appelée cavaillon, située de part et d'autre des pieds du rang 22, 24.

Selon une configuration, les rangs 22, 24 sont sensiblement rectilignes et parallèles entre eux. Le tracteur 10 (plus particulièrement la largeur de ses essieux avant et arrière) est dimensionné de manière à circuler dans les inter-rangs 28, entre les rangs 22, 24 disposés de part et d'autre de chaque inter-rang 28.

Selon un mode de réalisation, le dispositif porte-outils 20 supporte au moins un outil intérieur droit 30.1 positionné au niveau du demi-rang intérieur 22.1 situé à droite du tracteur 10, au moins un outil intérieur gauche 30.2 positionné au du demi-rang intérieur 24.1 situé à gauche du tracteur 10, au moins un outil extérieur droit 30.3 positionné au niveau du demi-rang extérieur 22.2 situé à droite du tracteur 10 ainsi qu'au moins un outil extérieur gauche 30.4 positionné au niveau du demi-rang extérieur 24.2 situé à gauche du tracteur 10.

Ce dispositif porte-outils 20 comprend un porte-outils intérieur 32 supportant les outils intérieurs droit et gauche 30.1, 30.2 ainsi qu'un porte-outils extérieur 34 supportant les outils extérieurs droit et gauche 30.3, 30.4, distinct du porte-outils intérieur 32.

Le porte-outils intérieur 32 comprend :
- au moins une traverse inférieure 36 configurée pour être positionnée sous le bloc moteur 14 du tracteur 10 entre les essieux avant et arrière 18.1, 18.2 et reliée au tracteur 10,
- deux supports intérieurs droit et gauche 38.1, 38.2 prévus à chaque extrémité de la traverse inférieure 36 supportant respectivement au moins un outil intérieur droit 30.1 et au moins un outil intérieur gauche 30.2.

Selon un agencement, le porte-outils intérieur 32 comprend deux traverses inférieures 36, une traverse inférieure avant et une traverse inférieure arrière parallèle entre elles, positionnées à la même hauteur et décalées l'une par rapport à l'autre selon la direction longitudinale.

Chaque traverse inférieure 36 présente une première extrémité 36.1 reliée au support intérieur droit 38.1 ainsi qu'une deuxième extrémité 36.2 reliée au support intérieur gauche 38.2.

Selon une configuration, la longueur (distance séparant les première et deuxième extrémités 36.1, 36.2) de chaque traverse inférieure 36 est fixe. Dans ce cas, les supports intérieurs droit et gauche 38.1, 38.2 sont fixes par rapport à chaque traverse inférieure 36. Selon une configuration, pour rendre les outils intérieurs droit et gauche 30.1, 30.2 mobiles selon la direction transversale, chaque outil intérieur droit ou gauche 30.1, 30.2 est relié au support intérieur droit ou gauche 38.1, 38.2 par un système d'évitement identique à ceux de l'art antérieur.

Selon une autre configuration, la longueur (distance séparant les première et deuxième extrémités 36.1, 36.2) de chaque traverse inférieure 36 est variable. Les supports intérieurs droit et gauche 38.1, 38.2 sont alors mobiles et peuvent se rapprocher ou s'écarter. Selon cette configuration, les extrémités droite et gauche 36.1, 36.2 de chaque traverse inférieure 36 sont télescopiques. Dans ce cas, chaque traverse inférieure 36 comprend trois parties, une partie centrale fixe et des parties d'extrémités mobiles qui coulissent par rapport à la partie centrale. Le porte-outils intérieur 32 comprend au moins un actionneur permettant de déplacer les supports intérieurs droit et gauche 38.1, 38.2.

Bien entendu, l'invention n'est pas limitée à ces modes de réalisation pour rendre les outils intérieurs droit et gauche 30.1, 30.2 mobiles. Ainsi, le porte-outils intérieur 32 pourrait comprendre une (ou plusieurs) traverse(s) inférieure(s) 36 télescopique(s) et un système d'évitement pour chaque outil intérieur droit et gauche 30.1, 30.2.

Selon un mode de fonctionnement, les supports intérieurs droit et gauche 38.1, 38.2 présentent des mouvements transversaux coordonnés, les supports intérieurs droit et gauche 38.1, 38.2 s'écartant ou se rapprochant de la même manière et simultanément.

Selon un autre mode de fonctionnement, les supports intérieurs droit et gauche 38.1, 38.2 présentent des mouvements transversaux indépendants les uns des autres. Dans ce cas, le porte-outils intérieur 32 comprend au moins un actionneur pour chaque support intérieur droit ou gauche 38.1, 38.2, les actionneurs des deux supports intérieurs droit et gauche 38.1 et 38.2 étant pilotés indépendamment l'un de l'autre.

Selon une configuration, le pilotage des outils intérieurs droit et gauche 30.1, 30.2 est manuel. Selon un mode de réalisation, le pilotage des outils intérieurs droit et gauche 30.1, 30.2 est automatique et autonome. A cet effet, le dispositif porte-outils comprend, pour chaque support intérieur droit et gauche 38.1, 38.2 ou outil intérieur droit au gauche 30.1, 30.2, au moins un capteur configuré pour prendre appui contre les plants des rangs afin de déterminer la distance séparant l'outil intérieur droit ou gauche et/ou le support intérieur droit ou gauche considéré et le rang et piloter un actionneur apte à déplacer l'outil intérieur droit ou gauche et/ou le support intérieur droit ou gauche considéré pour que la distance le séparant du rang soit sensiblement constante.

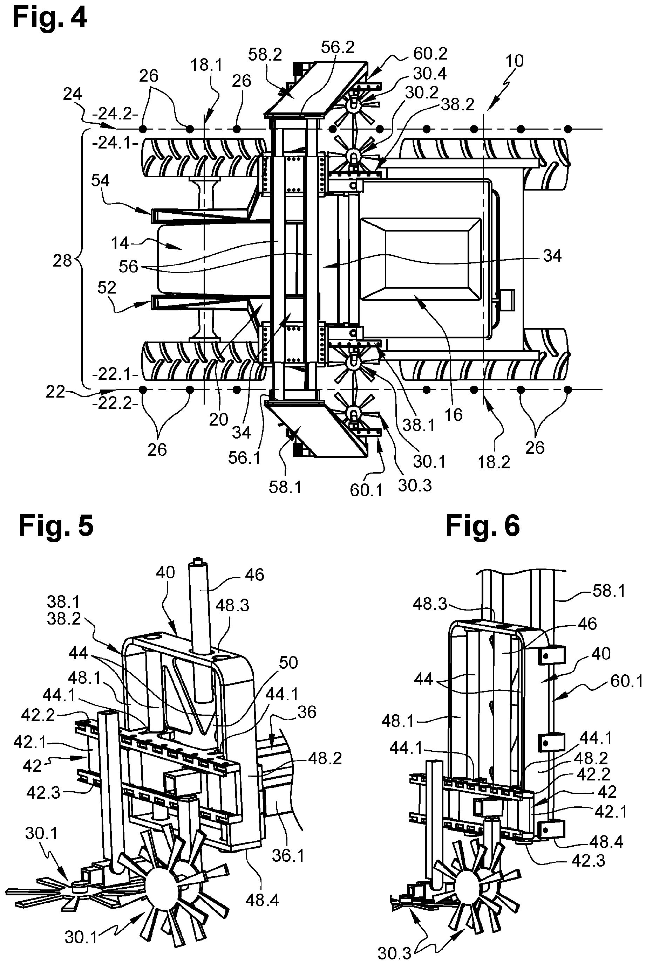

Selon un mode de réalisation visible sur la figure 5, chaque support intérieur droit ou gauche 38.1, 38.2 comprend une première partie 40 reliée à la (ou aux) traverse(s) inférieure(s) 36, une deuxième partie 42 supportant au moins un outil intérieur droit ou gauche 30.1, 30.2, au moins une glissière verticale 44 reliant les première et deuxième parties 40, 42 et permettant à la deuxième partie 42 de se déplacer selon une direction verticale ainsi qu'un actionneur 46 pour contrôler le mouvement vertical de la deuxième partie 42 par rapport à la première partie 40.

Selon une configuration, la première partie 40 comprend un cadre qui comporte deux montants avant et arrière 48.1, 48.2 ainsi que deux longerons supérieur et inférieur 48.3, 48.4 reliant les deux montants 48.1, 48.2 mais aussi une platine 50 reliant les montants avant et arrière 48.1, 48.2 à chaque traverse inférieure 36.

Chaque support intérieur droit ou gauche 38.1, 38.2 comprend deux glissières verticales 44 espacées selon la direction longitudinale, qui présentent chacune un arbre ou tube vertical reliant les longerons supérieur et inférieur 48.3, 48.4.

La deuxième partie 42 comprend un profilé en C, ouvert en direction du rang, qui présente une partie centrale verticale 42.1 et orientée longitudinalement ainsi que deux ailes 42.2, 42.3 sensiblement horizontales, positionnées en haut et en bas de la partie centrale verticale 42.1. Cette dernière présente, pour chaque glissière verticale 44, un palier de guidage 44.1 configuré pour coulisser le long d'une glissière verticale 44.

Selon un mode de réalisation, l'actionneur 46 est un vérin qui présente un corps solidaire de la première partie 40 ainsi qu'une tige solidaire de la deuxième partie 42.

Bien entendu, l'invention n'est pas limitée à ce mode de réalisation pour obtenir un mouvement vertical entre les première et deuxième parties 40, 42.

Selon un mode de réalisation, le profilé en C de la deuxième partie 42 est suffisamment long pour pouvoir y fixer plusieurs outils intérieurs droit ou gauche 30.1, 30.2 décalés selon la direction longitudinale.

La deuxième partie 42 peut présenter, notamment au niveau de ses ailes 42.2, 42.3 des encoches, des trous ou tout autre élément facilitant la fixation d'un outil.

Le porte-outils extérieur 34 comprend :
- des montants droit et gauche 52, 54, positionnés de part et d'autre du bloc moteur 14 du tracteur 10, qui présentent chacun une extrémité inférieure 52.1, 54.1 reliée, directement ou indirectement, au tracteur 10 et une extrémité supérieure 52.2, 54.2,
- au moins une traverse supérieure 56 positionnée au-dessus du bloc moteur 14 du tracteur 10, sensiblement à l'aplomb de la traverse inférieure 36 et reliant les extrémités supérieures 52.2, 54.2 des montants droit et gauche 52, 54. Ainsi, en vue de dessus, la traverse supérieure 56 est positionnée entre les essieux avant et arrière 18.1, 18.2.

Selon un agencement, le porte-outils extérieur 34 comprend deux traverses supérieures 56, une traverse supérieure avant et une traverse supérieure arrière parallèles entre elles, positionnées à la même hauteur et décalées l'une par rapport à l'autre selon la direction longitudinale.

Le porte-outils extérieur 34 comprend également un bras vertical extérieur droit 58.1 qui présente une extrémité supérieure reliée à une première extrémité 56.1 de chaque traverse supérieure 56 et une extrémité inférieure supportant un support extérieur droit 60.1 ainsi qu'un bras vertical extérieur gauche 58.2 qui présente une extrémité supérieure reliée à une deuxième extrémité 56.2 de chaque traverse supérieure 56 et une extrémité inférieure supportant un support extérieur gauche 60.2.

Les bras 58.1, 58.2 sont symétriques par rapport à un plan médian vertical du dispositif porte-outils. Ils peuvent être rectilignes, comme illustré à droite de la figure 1, ou avoir une portion supérieure inclinée et une portion inférieure rectiligne, comme illustré à gauche de la figure 1. L'invention n'est pas limitée aux géométries décrites pour les bras 58.1, 58.2.

Selon une configuration, la longueur (distance séparant les première et deuxième extrémités 56.1, 56.2) de chaque traverse supérieure 56 est fixe. Dans ce cas, les supports extérieurs droit et gauche 60.1, 60.2 sont fixes par rapport à chaque traverse supérieure 56. Selon une configuration, pour rendre les outils extérieurs droit et gauche 30.3, 30.4 mobiles selon la direction transversale, chaque outil extérieur droit ou gauche 30.3, 30.4 est relié au support extérieur droit ou gauche 60.1, 60.2 par un système d'évitement identique à ceux de l'art antérieur.

Selon une autre configuration, la longueur (distance séparant les première et deuxième extrémités 56.1, 56.2) de chaque traverse supérieure 56 est variable. Les supports extérieurs droit et gauche 60.1, 60.2 sont alors mobiles et peuvent se rapprocher ou s'écarter. Selon cette configuration, les extrémités droite et gauche 56.1, 56.2 de chaque traverse supérieure 56 sont télescopiques. Dans ce cas, chaque traverse supérieure 56 comprend trois parties, une partie centrale fixe et reliée aux montants droit et gauche 52, 54 ainsi que des parties d'extrémités mobiles qui coulissent par rapport à la partie centrale. Le porte-outils extérieur 34 comprend au moins un actionneur permettant de déplacer les supports extérieurs droit et gauche 60.1, 60.2.

Bien entendu, l'invention n'est pas limitée à ces modes de réalisation pour rendre les outils extérieurs droit et gauche 30.3, 30.4 mobiles. Ainsi, le porte-outils extérieur 34 pourrait comprendre une (ou plusieurs) traverse(s) supérieure(s) 56 télescopique(s) et un système d'évitement pour chaque outil extérieur droit et gauche 30.3, 30.4. Chaque traverse inférieure 36 et/ou supérieure 56 peut présenter ou non des extrémités droite et gauche 36.1, 36.2, 56.1, 56.2 télescopiques.

Selon un mode de fonctionnement, les supports extérieurs droit et gauche 60.1, 60.2 présentent des mouvements transversaux coordonnés, les supports extérieurs droit et gauche s'écartant ou se rapprochant de la même manière et simultanément.

Selon un autre mode de fonctionnement, les supports extérieurs droit et gauche 60.1, 60.2 présentent des mouvements transversaux indépendants les uns des autres. Dans ce cas, le porte-outils extérieur 34 comprend au moins un actionneur pour chaque support extérieur droit et gauche 60.1, 60.2, les actionneurs des deux supports extérieurs droit et gauche 60.1 et 60.2 étant pilotés indépendamment l'un de l'autre.

Selon une configuration, le pilotage des outils extérieurs droit et gauche 30.3, 30.4 est manuel. Selon un mode de réalisation, le pilotage des outils extérieurs droit et gauche 30.3, 30.4 est automatique et autonome. A cet effet, le dispositif porte-outils comprend, pour chaque support extérieur droit et gauche 60.1, 60.2 ou outil extérieur droit au gauche 30.3, 30.4, au moins un capteur configuré pour prendre appui contre les plants des rangs afin de déterminer la distance séparant l'outil extérieur droit ou gauche et/ou le support extérieur droit ou gauche considéré et le rang et piloter un actionneur apte à déplacer l'outil extérieur droit ou gauche et/ou le support extérieur droit ou gauche considéré pour que la distance le séparant du rang soit sensiblement constante.

Selon un agencement, les porte-outils intérieur et extérieur 32, 34 sont positionnés l'un par rapport à l'autre de manière à ce que :
- le support intérieur droit 38.1 soit positionné sensiblement en face du support extérieur droit 60.1, les supports intérieur et extérieur droits 38.1, 60.1 étant positionnés de part et d'autre d'un même rang,
- le support intérieur gauche 38.2 soit positionné sensiblement en face du support extérieur gauche 60.2, les supports intérieur et extérieur gauches 38.2, 60.2 étant positionnés de part et d'autre d'un même rang.

Selon un mode de réalisation, les supports extérieurs droit et gauche 60.1, 60.2 sont sensiblement identiques aux supports intérieurs droit et gauche 38.1, 38.2.

Ainsi, chaque support extérieur droit ou gauche 60.1, 60.2 comprend une première partie 40 reliée au bras vertical extérieur droit ou gauche 58.1, 58.2, une deuxième partie 42 supportant au moins un outil extérieur droit ou gauche 30.3, 30.4, au moins une glissière verticale 44 reliant les première et deuxième parties 40, 42 et permettant à la deuxième partie 42 de se déplacer selon la direction verticale ainsi qu'un actionneur 46 pour contrôler le mouvement vertical de la deuxième partie 42 par rapport à la première partie 40.

Selon une configuration, la première partie 40 comprend un cadre qui présente deux montants avant et arrière 48.1, 48.2 ainsi que deux longerons supérieur et inférieur 48.3, 48.4 reliant les deux montants 48.1, 48.2 mais aussi une platine 50 reliant les montants avant et arrière 48.1, 48.2 à l'un des bras verticaux extérieurs droit ou gauche 58.1, 58.2.

Chaque support intérieur droit ou gauche 38.1, 38.2 comprend deux glissières verticales 44, espacées selon la direction longitudinale, qui présentent chacune un arbre ou un tube vertical reliant les longerons supérieur et inférieur 48.3, 48.4.

La deuxième partie 42 comprend un profilé en C ouvert en direction du rang, qui comporte une partie centrale verticale 42.1 et orientée longitudinalement ainsi que deux ailes 42.2, 42.3 sensiblement horizontales, positionnées en haut et en bas de la partie centrale verticale 42.1. Cette dernière présente pour chaque glissière verticale un palier de guidage 44.1 configuré pour coulisser le long d'une glissière verticale 44.

Selon un mode de réalisation, l'actionneur 46 est un vérin qui présente un corps solidaire de la première partie 40 ainsi qu'une tige solidaire de la deuxième partie 42.

Bien entendu, l'invention n'est pas limitée à ce mode de réalisation pour obtenir un mouvement vertical entre les première et deuxième parties 40, 42.

Selon un mode de réalisation, le profilé en C de la deuxième partie 42 est suffisamment long pour pouvoir y fixer plusieurs outils extérieurs droit ou gauche 30.3, 30.4 décalés selon la direction longitudinale.

La deuxième partie 42 peut présenter, notamment au niveau de ses ailes 42.2, 42.3 des encoches, des trous ou tout autre élément facilitant la fixation d'un outil.

Selon un mode de réalisation, les montants droit et gauche 52, 54 sont sensiblement symétriques par rapport à un plan médian vertical du tracteur 10 (vertical et parallèle à la direction longitudinale).

Chaque montant droit ou gauche 52, 54 présente, en vue de côté une forme approximativement triangulaire rectangle présentant un premier côté qui correspond à l'extrémité inférieure 52, 54 du montant 52, 54, est parallèle à la direction longitudinale et s'étend le long du bloc moteur 14, approximativement de l'avant du tracteur 10 jusqu'au poste de conduite 16.

Ainsi, chaque montant droit ou gauche 52, 54 comprend des premier et deuxième points d'ancrage 62.1, 62.2 situés au niveau de l'extrémité inférieure 52.1, 54.1 du montant droit ou gauche 52, 54, les plus espacés possible, positionnés aux extrémités du premier côté de la forme triangulaire ainsi qu'un troisième point d'ancrage 62.3 situé au niveau de l'extrémité supérieure 52.2, 54.2 du montant droit ou gauche 52, 54 correspondant à un sommet de la forme triangulaire opposé au premier côté.

Le fait de prévoir deux points d'ancrage 62.1, 62.2 les plus espacés possible au niveau de l'extrémité inférieure 52.1, 54.1 de chaque montant droit et gauche 52, 54 permet une meilleure reprise des efforts entre le porte-outils extérieur 34 et le tracteur 10.

Selon un mode de réalisation, chaque montant droit ou gauche 52, 54 comprend une partie basse 64 sensiblement verticale et une partie haute 66 inclinée s'évasant vers le haut et vers l'extérieur. Ainsi, les troisièmes points d'ancrage 62.3 des montants droit et gauche 52, 54 sont plus espacés que les premiers ou deuxièmes points d'ancrage 62.1, 62.2. Cet agencement contribue à améliorer la reprise des efforts entre les traverses supérieures 56 et les montants droit et gauche 52, 54.

La partie haute 66 comprend un bord inférieur relié à la partie basse et un bord supérieur au niveau duquel est présent le troisième point d'ancrage 62.3.

Cette partie haute 66 comprend au moins une plaque pleine ou une forme en caisson pour une plus grande rigidité.

Selon un agencement, la partie haute 66 représente un tiers à un quart de la hauteur totale de chaque montant droit ou gauche 52, 54.

Selon une configuration, chaque montant droit ou gauche 52, 54 comprend, au niveau du troisième point d'ancrage 62.3, une platine sensiblement horizontale et reliée par soudage à la partie haute 66, sur laquelle reposent les traverses supérieures 56 reliées à ladite platine par boulonnage.

Bien entendu, l'invention n'est pas limitée à ce mode de réalisation pour assurer la liaison entre les traverses supérieures 56 et les montants droit et gauche 52, 54.

Selon une configuration, la partie basse 64 présente un évidement 68 pour dégager une partie du champ de vision du conducteur du tracteur et lui permettre de mieux visualiser les roues droite et gauche de l'essieu avant 18.1.

Selon un mode de réalisation, chaque montant droit et gauche 52, 54 est une structure mécanosoudée qui comprend :
- un premier profilé 64.1 creux et vertical, positionné juste à l'avant du poste de conduite 16, qui présente une extrémité inférieure au niveau de laquelle est présent le deuxième point d'ancrage 62.2,
- un deuxième profilé 64.2 creux et horizontal, relié à la partie haute 66, qui présente une première extrémité reliée à l'extrémité supérieure du premier profilé 64.1,
- un troisième profilé 64.3 oblique et creux qui présente une première extrémité au niveau de laquelle est présent le premier point d'ancrage 62.1 et une deuxième extrémité reliée à la deuxième extrémité du deuxième profilé 64.2,
- un quatrième profilé 64.4 horizontal et creux qui présente une première extrémité reliée au premier profilé 64.1, légèrement décalée vers le haut par rapport à l'extrémité inférieure du premier profilé 64.1, et une deuxième extrémité reliée au troisième profilé 64.3, légèrement décalée vers le haut par rapport à la première extrémité du troisième profilé 64.3.

Ainsi, les quatre profilés 64.1 à 64.4 forment approximativement un cadre trapézoïdal rectangle délimitant l'évidement 68.

Ces différents profilés 64.1 à 64.4 sont creux et ont une section transversale carrée ou rectangulaire. Cette configuration confère une grande rigidité aux montants droit et gauche 52, 54 tout en limitant leur masse.

Bien entendu, l'invention n'est pas limitée à ce mode de réalisation pour les montants droit et gauche 52, 54.

Selon un mode de réalisation, les porte-outils intérieur et extérieur 32 et 34 ne sont pas directement reliés au tracteur 10.

Le dispositif porte-outils 20 comprend au moins un châssis d'interfaçage 70 fixé aux différents ancrages du tracteur 10 et sur lequel sont fixés les porte-outils intérieur et extérieur 32, 34. Ainsi, quel que soit le modèle du tracteur, les porte-outils intérieur et extérieur 32 et 34 sont identiques. Seul le châssis d'interfaçage 70 est adapté, si nécessaire, d'un modèle de tracteur à l'autre.

Ce châssis d'interfaçage 70 peut prendre différentes formes en fonction du positionnement des ancrages sur le bloc moteur 14. A titre indicatif, le châssis d'interfaçage peut comprendre un longeron droit sur lequel est fixé le montant droit 52, un longeron gauche sur lequel est fixé le montant gauche 54, chaque traverse inférieure 36 du porte-outils intérieur 32 étant fixée aux longerons droit et gauche. Bien entendu, l'invention n'est pas limitée à ce mode de réalisation pour le châssis d'interfaçage 70.

Le dispositif porte-outils 20 permet de supporter, pour les deux rangs situés de part et d'autre de l'inter-rang 28 dans lequel circule le tracteur 10, au moins une paire d'outils intérieur et extérieur disposés face à face de part et d'autre du rang.

Selon une configuration, chaque support intérieur/extérieur droit/gauche 38.1, 38.2, 60.1, 60.2 est configuré pour pouvoir y fixer plusieurs outils qui travaillent le sol l'un à la suite de l'autre pour une plus grande efficacité.

Ainsi, le fait de pouvoir faire travailler simultanément, face à face, des outils de type disques émotteurs permet de limiter la projection de mottes et de poussière.

De plus, dans le cas d'une paire d'outils de type doigts bineurs, il est possible de rapprocher les deux outils de sorte que les doigts des deux outils s'imbriquent légèrement les uns dans les autres. En fonctionnement, les plants passent entre les doigts imbriqués. De manière surprenante, cet agencement d'outils imbriqués réduit les risques d'endommagement des plants ou des pieds de vigne, les forces exercées par les deux outils disposés de part et d'autre du rang s'équilibrant.

Bien entendu, l'invention n'est pas limitée à ces types d'outils. D'autres outils peuvent être montés sur le dispositif porte-outils de l'invention. De même, l'invention n'est pas limitée à la vigne. Elle peut être utilisée pour d'autres plantes cultivées selon des rangs entre lesquels peut circuler un tracteur 10.

## Revendications

1. Dispositif porte-outils configuré pour être monté sur un tracteur (10) qui comprend des essieux avant (18.1) et arrière (18.2), un bloc moteur (14) et un poste de conduite (16), dispositif porte-outils comprenant:
- un porte-outils intérieur (32) comportant :
o au moins une traverse inférieure (36) configurée pour être positionnée sous le bloc moteur (16) du tracteur (10) entre les essieux avant et arrière (18.1, 18.2) et reliée au tracteur (10),
o deux supports intérieurs droit et gauche (38.1, 38.2) prévus aux extrémités de la (ou les) traverse(s) inférieure(s) (36),
a. au moins un outil intérieur droit (30.1) relié au support intérieur droit (38.1) et au moins un outil intérieur gauche (30.2) relié au support intérieur gauche (38.2),
- un porte-outils extérieur (34) comportant :
o des montants droit et gauche (52, 54), configurés pour être positionnés de part et d'autre du bloc moteur (14) du tracteur (10), qui présentent chacun une extrémité inférieure (52.1, 54.1) configurée pour être reliée au tracteur (10) et une extrémité supérieure (52.2, 54.2),
o au moins une traverse supérieure (56) reliant les extrémités supérieures (52.2, 54.2) des montants droit et gauche (52, 54) et configurée pour être positionnée au-dessus du bloc moteur (14) du tracteur (10),
o un bras vertical extérieur droit (58.1) qui présente une extrémité supérieure reliée à une première extrémité (56.1) de la (ou les) traverse(s) supérieure(s) (56),
o un bras vertical extérieur gauche (58.2) qui présente une extrémité supérieure reliée à une deuxième extrémité (56.2) de la (ou les) traverse(s) supérieure(s) (56),
o deux supports extérieurs droit et gauche (60.1, 60.2) prévus aux extrémités inférieures des bras verticaux extérieurs droit et gauche (58.1, 58.2),
o au moins un outil extérieur droit (30.3) relié au support extérieur droit (60.1) et au moins un outil extérieur gauche (30.4) relié au support extérieur gauche (60.2),
**caractérisé en ce que** les porte-outils intérieurs et extérieurs (32, 34) sont positionnés l'un par rapport à l'autre de manière à ce que :
o le support intérieur droit (38.1) soit positionné sensiblement en face du support extérieur droit (60.1), les supports intérieur et extérieur droits (38.1, 60.1) étant positionnés de part et d'autre d'un même rang en fonctionnement,
o le support intérieur gauche (38.2) soit positionné sensiblement en face du support extérieur gauche (60.2), les supports intérieur et extérieur gauches (38.2, 60.2) étant positionnés de part et d'autre d'un même rang en fonctionnement.

2. Dispositif porte-outils selon la revendication précédente, **caractérisé en ce que** chaque montant droit ou gauche (52, 54) présente une forme approximativement triangulaire rectangle et comprend des premier et deuxième points d'ancrage (62.1, 62.2) les plus espacés possible et situés au niveau de l'extrémité inférieure (52.1, 54.1) du montant droit ou gauche (52, 54) correspondant à un premier côté de la forme triangulaire rectangle ainsi qu'un troisième point d'ancrage (62.3) situé au niveau de l'extrémité supérieure (52.2, 54.2) du montant droit ou gauche (52, 54) correspondant à un sommet de la forme triangulaire opposé au premier côté.

3. Dispositif porte-outils selon la revendication précédente, **caractérisé en ce que** chaque montant droit ou gauche (52, 54) comprend une partie basse (64) sensiblement verticale et une partie haute (66) inclinée s'évasant vers le haut et vers l'extérieur.

4. Dispositif porte-outils selon la revendication précédente, **caractérisé en ce que** la partie basse (64) présente un évidement (68).

5. Dispositif porte-outils selon la revendication précédente, **caractérisé en ce que** chaque montant droit et gauche (52, 54) comprend :
- un premier profilé (64.1) creux et vertical, configuré pour être positionné juste à l'avant du poste de conduite (16), qui présente une extrémité inférieure au niveau de laquelle est présent le deuxième point d'ancrage (62.2),
- un deuxième profilé (64.2) creux et horizontal, relié à la partie haute (66), qui présente une première extrémité reliée à l'extrémité supérieure du premier profilé (64.1),
- un troisième profilé (64.3) oblique et creux qui présente une première extrémité au niveau de laquelle est présent le premier point d'ancrage (62.1) et une deuxième extrémité reliée à la deuxième extrémité du deuxième profilé (64.2),
- un quatrième profilé (64.4) horizontal et creux qui présente une première extrémité reliée au premier profilé (64.1) et une deuxième extrémité reliée au troisième profilé (64.3),
- les quatre profilés (64.1 à 64.4) formant approximativement un cadre délimitant l'évidement (68).

6. Dispositif porte-outils selon l'une des revendications précédentes, **caractérisé en ce qu'**il comprend au moins un châssis d'interfaçage (70) configuré pour être fixé à différents ancrages du tracteur (10) et sur lequel sont fixés les porte-outils intérieur et extérieur (32, 34).

7. Dispositif porte-outils selon l'une des revendications précédentes, **caractérisé en ce que** chaque support intérieur ou extérieur, droit ou gauche (38.1, 38.2, 60.1, 60.2) comprend une première partie (40) reliée à la (ou aux) traverse(s) inférieure(s) ou supérieure(s) (36, 56), une deuxième partie (42) supportant au moins un outil intérieur ou extérieur, droit ou gauche (30.1, 30.2, 30.3, 30.4), au moins une glissière verticale (44) reliant les première et deuxième parties (40, 42) et permettant à la deuxième partie (42) de se déplacer selon une direction verticale ainsi qu'un actionneur (46) pour contrôler le mouvement vertical de la deuxième partie (42) par rapport à la première partie (40).

8. Dispositif porte-outils selon la revendication précédente, **caractérisé en ce que** la deuxième partie (42) de chaque support intérieur ou extérieur, droit ou gauche (38.1, 38.2, 60.1, 60.2), comprend un profilé en C, ouvert en direction du rang en fonctionnement, qui comporte une partie centrale verticale (42.1) et orientée selon une direction longitudinale ainsi que deux ailes (42.2, 42.3) sensiblement horizontales, positionnées en haut et en bas de la partie centrale verticale (42.1), le profilé en C étant suffisamment long pour pouvoir y fixer plusieurs outils extérieurs ou intérieurs, droit ou gauche (30.1, 30.2, 30.3, 30.4) décalés selon la direction longitudinale.

9. Dispositif porte-outils selon l'une des revendications précédentes, **caractérisé en ce que** chaque traverse inférieure (36) et/ou supérieure (56) présente des extrémités droite et gauche (36.1, 36.2, 56.1, 56.2) télescopiques.

10. Tracteur comprenant un dispositif porte-outils selon l'une des revendications précédentes.

## Patentansprüche

1. Werkzeugträgervorrichtung, die so eingerichtet ist, dass sie an einem Traktor (10) angebracht werden kann, der eine Vorder- (18.1) und eine Hinterachse (18.2), einen Motorblock (14) und einen Fahrerstand (16) aufweist, wobei die Werkzeugträgervorrichtung Folgendes aufweist:
- einen inneren Werkzeugträger (32) mit:
∘ wenigstens einem unteren Querträger (36), der so eingerichtet ist, dass er unter dem Motorblock (16) des Traktors (10) zwischen der Vorder- und Hinterachse (18.1, 18.2) angeordnet und mit dem Traktor (10) verbunden werden kann,
∘ zwei rechten und linken Innenhaltern (38.1, 38.2), die an den Enden des (oder der) unteren Querträger(s) (36) vorgesehen sind,
∘ wenigstens einem rechten Innenwerkzeug (30.1), das mit dem rechten Innenhalter (38.1) verbunden ist, und wenigstens einem linken Innenwerkzeug (30.2), das mit dem linken Innenhalter (38.2) verbunden ist,
- einen äußeren Werkzeugträger (34) mit:
∘ rechten und linken Stützen (52, 54), die so eingerichtet sind, dass sie auf beiden Seiten des Motorblocks (14) des Traktors (10) angeordnet werden können, und die jeweils ein unteres Ende (52.1, 54.1) aufweisen, das so eingerichtet ist, dass es mit dem Traktor (10) verbunden werden kann, und ein oberes Ende (52.2, 54.2) aufweisen,
∘ wenigstens einem oberen Querträger (56), der die oberen Enden (52.2, 54.2) der rechten und linken Stützen (52, 54) verbindet und so eingerichtet ist, dass er über dem Motorblock (14) des Traktors (10) angeordnet werden kann,
∘ einem rechten äußeren vertikalen Arm (58.1), der ein oberes Ende aufweist, das mit einem ersten Ende (56.1) des (oder der) oberen Querträger(s) (56) verbunden ist,
∘ einem linken äußeren vertikalen Arm (58.2), der ein oberes Ende aufweist, das mit einem zweiten Ende (56.2) des (oder der) oberen Querträger(s) (56) verbunden ist,
∘ zwei rechten und linken Außenhaltern (60.1, 60.2), die an den unteren Enden des rechten und linken äußeren vertikalen Arms (58.1, 58.2) vorgesehen sind,
∘ wenigstens einem rechten Außenwerkzeug (30.3), das mit dem rechten Außenhalter (60.1) verbunden ist, und wenigstens einem linken Außenwerkzeug (30.4), das mit der linken Außenhalter (60.2) verbunden ist,
- **dadurch gekennzeichnet, dass** die inneren und äußeren Werkzeugträger (32, 34) relativ zueinander so angeordnet sind, dass:
∘ der rechte Innenhalter (38.1) im Wesentlichen gegenüber dem rechten Außenhalter (60.1) angeordnet ist, wobei der rechte Innen- und Außenhalter (38.1, 60.1) im Betrieb beidseits einer gleichen Reihe angeordnet sind,
∘ der linke Innenhalter (38.2) im Wesentlichen gegenüber dem linken Außenhalter (60.2) angeordnet ist, wobei der linke Innen- und Außenhalter (38.2, 60.2) im Betrieb beidseits einer gleichen Reihe angeordnet sind.

2. Werkzeugträgervorrichtung nach dem vorhergehenden Anspruch, **dadurch gekennzeichnet, dass** jede rechte oder linke Stütze (52, 54) eine annähernd rechtwinklige Dreiecksform aufweist und erste und zweite Verankerungspunkte (62.1, 62.2) umfasst, die möglichst weit auseinander liegen und sich im Bereich des unteren Endes (52.1, 54.1) der rechten oder linken Stütze (52, 54) befinden, der einer ersten Seite der rechtwinkligen Dreiecksform entspricht, sowie einen dritten Verankerungspunkt (62.3) umfasst, der sich am oberen Ende (52.2, 54.2) der rechten oder linken Stütze (52, 54) befindet, das einem Scheitelpunkt der Dreiecksform gegenüber der ersten Seite entspricht.

3. Werkzeugträgervorrichtung nach dem vorhergehenden Anspruch, **dadurch gekennzeichnet, dass** jede rechte oder linke Stütze (52, 54) einen im Wesentlichen vertikalen unteren Teil (64) und einen geneigten oberen Teil (66) umfasst, der sich nach oben und nach außen hin aufweitet.

4. Werkzeugträgervorrichtung nach dem vorhergehenden Anspruch, **dadurch gekennzeichnet, dass** der untere Teil (64) eine Aussparung (68) aufweist.

5. Werkzeugträgervorrichtung nach dem vorhergehenden Anspruch, **dadurch gekennzeichnet, dass** jede rechte und linke Stütze (52, 54) Folgendes umfasst:
- ein erstes hohles und vertikales Profil (64.1), das so eingerichtet ist, dass es direkt vor dem Fahrerstand (16) positioniert werden kann, und das ein unteres Ende aufweist, in dessen Bereich der zweite Verankerungspunkt (62.2) vorhanden ist,
- ein zweites hohles und horizontales Profil (64.2), das mit dem oberen Teil (66) verbunden ist und ein erstes Ende aufweist, das mit dem oberen Ende des ersten Profils (64.1) verbunden ist,
- ein drittes schräges und hohles Profil (64.3), das ein erstes Ende, an dem sich der erste Verankerungspunkt (62.1) befindet, und ein zweites Ende aufweist, das mit dem zweiten Ende des zweiten Profils (64.2) verbunden ist,
- ein viertes horizontales und hohles Profil (64.4), das ein erstes Ende, das mit dem ersten Profil (64.1) verbunden ist, und ein zweites Ende aufweist, das mit dem dritten Profil (64.3) verbunden ist,
- wobei die vier Profile (64.1 bis 64.4) ungefähr einen Rahmen bilden, der die Aussparung (68) begrenzt.

6. Werkzeugträgervorrichtung nach einem der vorhergehenden Ansprüche, **dadurch gekennzeichnet, dass** diese wenigstens einen Schnittstellenrahmen (70) umfasst, der so eingerichtet ist, dass er an verschiedenen Verankerungen des Traktors (10) befestigt werden kann und an dem der innere und der äußere Werkzeugträger (32, 34) befestigt sind.

7. Werkzeugträgervorrichtung nach einem der vorhergehenden Ansprüche, **dadurch gekennzeichnet, dass** jeder rechte oder linke Innen- oder Außenträger (38.1, 38.2, 60.1, 60.2) ein erstes Teil (40) aufweist, das mit dem (oder den) unteren oder oberen Querträger(n) (36, 56) verbunden ist, ein zweites Teil (42) aufweist, das wenigstens ein rechtes oder linkes Innen- oder Außenwerkzeug (30.1, 30.2, 30.3, 30.4) trägt, wenigstens eine vertikale Schiene (44), die das erste und das zweite Teil (40, 42) verbindet und es dem zweiten Teil (42) ermöglicht, sich in einer vertikalen Richtung zu bewegen, sowie einen Aktuator (46) zum Steuern der vertikalen Bewegung des zweiten Teils (42) in Bezug auf das erste Teil (40) aufweist.

8. Werkzeugträgervorrichtung nach dem vorhergehenden Anspruch, **dadurch gekennzeichnet, dass** das zweite Teil (42) jedes rechten oder linken Innen- oder Außenträgers (38.1, 38.2, 60.1, 60.2) ein C-förmiges Profil umfasst, das im Betrieb in Richtung der Reihe offen ist und ein in eine Längsrichtung ausgerichtetes vertikales Mittelteil (42.1) sowie zwei im Wesentlichen horizontale Flügel (42.2, 42.3) aufweist, die oben und unten am vertikalen Mittelteil (42.1) angeordnet sind, wobei das C-Profil ausreichend lang ist, um mehrere rechte oder linke Innen- oder Außenwerkzeuge (30.1, 30.2, 30.3, 30.4), die in Längsrichtung versetzt sind, daran befestigen zu können.

9. Werkzeugträgervorrichtung nach einem der vorhergehenden Ansprüche, **dadurch gekennzeichnet, dass** jeder untere (36) und/oder obere (56) Querträger ein rechtes und linkes Ende (36.1, 36.2, 56.1, 56.2) aufweist, die teleskopartig ausziehbar sind.

10. Traktor mit einer Werkzeugträgervorrichtung nach einem der vorhergehenden Ansprüche.

## Claims

1. Implement-holder device configured to be mounted on a tractor (10) which comprises front (18.1) and rear (18.2) axles, an engine block (14) and a driving station (16), the implement-holder device comprising:
- an inner implement-holder (32) comprising:
o at least one bottom cross member (36) configured to be positioned under the engine block (16) of the tractor (10) between the front and rear axles (18.1, 18.2) and linked to the tractor (10),
o two right and left inner supports (38.1, 38.2) provided at the ends of the bottom crossmember or crossmembers (36),
o at least one right inner implement (30.1) linked to the right bottom support (38.1) and at least one left inner implement (30.2) linked to the left inner support (38.2),
- an outer implement-holder (34) comprising:
o right and left uprights (52, 54), configured to be positioned on either side of the engine block (14) of the tractor (10), which each have a bottom end (52.1, 54.1) configured to be linked to the tractor (10) and a top end (52.2, 54.2),
o at least one top crossmember (56) linking the top ends (52.2, 54.2) of the right and left uprights (52, 54) and configured to be positioned above the engine block (14) of the tractor (10),
o a right outer vertical arm (58.1) which has a top end linked to a first end (56.1) of the top crossmember or crossmembers (56),
o a left outer vertical arm (58.2) which has a top end linked to a second end (56.2) of the top crossmember or crossmembers (56),
o two right and left outer supports (60.1, 60.2) provided at the bottom ends of the right and left outer vertical arms (58.1, 58.2),
o at least one right outer implement (30.3) linked to the right outer support (60.1) and at least one left outer implement (30.4) linked to the left outer support (60.2),
- **characterized in that** the inner and outer implement-holders (32, 34) are positioned with respect to one another in such a way that:
o the right inner support (38.1) is positioned substantially facing the right outer support (60.1), the right inner and outer supports (38.1, 60.1) being positioned on either side of a same row in operation,
o the left inner support (38.2) is positioned substantially facing the left outer support (60.2), the left inner and outer supports (38.2, 60.2) being positioned on either side of a same row in operation..

2. Implement-holder device according to the preceding claim, **characterized in that** each right or left upright (52, 54) has an approximately triangular rectangle form and comprises first and second anchor points (62.1, 62.2) spaced apart as far as possible and situated at the bottom end (52.1, 54.1) of the right or left upright (52, 54) corresponding to a first side of the triangular rectangle form and a third anchor point (62.3) situated at the top end (52.2, 54.2) of the right or left upright (52, 54) corresponding to a vertex of the triangular form opposite the first side.

3. Implement-holder device according to the preceding claim, **characterized in that** each right or left upright (52, 54) comprises a substantially vertical bottom part (64) and an inclined top part (66) flaring upwards and outwards.

4. Implement-holder device according to the preceding claim, **characterized in that** the bottom part (64) has a void (68).

5. Implement-holder device according to the preceding claim, **characterized in that** each right and left upright (52, 54) comprises:
- a first, hollow and vertical profiled element (64.1), configured to be positioned just in front of the driving station (16), which has a bottom end at which the second anchor point (62.2) is present,
- a second, hollow and horizontal profiled element (64.2), linked to the top part (66), which has a first end linked to the top end of the first profiled element (64.1),
- a third, oblique and hollow profiled element (64.3) which has a first end at which the first anchor point (62.1) is present and a second end linked to the second end of the second profiled element (64.2),
- a fourth, horizontal and hollow profiled element (64.4) which has a first end linked to the first profiled element (64.1) and a second end linked to the third profiled element (64.3),
- the four profiled elements (64.1 to 64.4) approximately forming a frame delimiting the void (68) .

6. Implement-holder device according to one of the preceding claims, **characterized in that** it comprises at least one interfacing chassis (70) configured to be fixed to different anchors of the tractor (10) and to which the inner and outer implement-holders (32, 34) are fixed.

7. Implement-holder device according to one of the preceding claims, **characterized in that** each inner or outer support, right or left (38.1, 38.2, 60.1, 60.2), comprises a first part (40) linked to the bottom or top crossmember or crossmembers (36, 56), a second part (42) supporting at least one inner or outer implement, right or left (30.1, 30.2, 30.3, 30.4), at least one vertical guideway (44) linking the first and second parts (40, 42) and allowing the second part (42) to be displaced in a vertical direction and an actuator (46) for controlling the vertical movement of the second part (42) with respect to the first part (40).

8. Implement-holder device according to the preceding claim, **characterized in that** the second part (42) of each inner or outer support, right or left (38.1, 38.2, 60.1, 60.2), comprises a C-shaped profiled element, open towards the row in operation, which comprises a vertical central part (42.1) oriented in a longitudinal direction and two substantially horizontal wings (42.2, 42.3), positioned at the top and at the bottom of the vertical central part (42.1), the C-shaped profiled element being long enough to be able to fix thereon multiple outer or inner implements, right or left (30.1, 30.2, 30.3, 30.4), offset in the longitudinal direction.

9. Implement-holder device according to one of the preceding claims, **characterized in that** each bottom (36) and/or top (56) crossmember has right and left ends (36.1, 36.2, 56.1, 56.2) that are telescopic.

10. Tractor comprising an implement-holder device according to one of the preceding claims.
